# EUROPÄISCHE PATENTSCHRIFT

(11) **EP 1 292 071 B1**
(45) Veröffentlichungstag und Bekanntmachung des Hinweises auf die Patenterteilung: **05.03.2008**
(21) Anmeldenummer: 02102313.0
(22) Anmeldetag: 05.09.2002
(51) Int. Cl.: H04L 12/40, H04L 12/64

(54) **Kommunikationsnetzwerk und Verfahren zur Steuerung des Kommunikationsnetzwerks**
Communication network and method for controlling the communication network
Réseau de communication et procédé de commande d'un tel réseau de communication

(30) Priorität: 07.09.2001 DE 10144070
(43) Veröffentlichungstag der Anmeldung: 12.03.2003
(73) Patentinhaber: Philips Intellectual Property & Standards GmbH, 20099 Hamburg (DE); NXP B.V., 5656 AG Eindhoven (NL)
(72) Erfinder: Fuhrmann, Peter, 52088, Aachen (DE); Zinke, Manfred, 52088, Aachen (DE)
(74) Vertreter: Volmer, Georg

(56) Entgegenhaltungen:
- DE-A1- 19 627 362
- US-A- 5 479 420
- US-A- 5 737 212
- TEMPLE C ED - INSTITUTE OF ELECTRICAL AND ELECTRONICS ENGINEERS: "AVOIDING THE BABBLING-IDIOT FAILURE IN A TIME-TRIGGERED COMMUNICATION SYSTEM" 28TH ANNUAL INTERNATIONAL SYMPOSIUM ON FAULT-TOLERANT COMPUTING. DIGEST OF PAPERS. FTCS-28. MUNICH, JUNE 23 - 25, 1998, ANNUAL INTERNATIONAL SYMPOSIUM ON FAULT-TOLERANT COMPUTING, LOS ALAMITOS, CA : IEEE COMPUTER SOC, US, 23. Juni 1998 (1998-06-23), Seiten 218-227, XP000804717 ISBN: 0-8186-8471-2

## Beschreibung

Die Erfindung bezieht sich auf ein Kommunikationsnetzwerk und ein Verfahren zur Steuerung des Kommunikationsnetzwerks. Ein derartiges Kommunikationsnetzwerk ist beispielsweise aus *TTP: "*Drive by Wire" in greifbarer Nähe', Dr. Stefan Poledna, Georg Kroiss; "Elektronik", Nr. 14, 1999, Seiten 36 bis 43 bekannt.

Für derartige verteilte Echtzeit-Computersysteme, wie sie zum Beispiel in der Automobilindustrie eingesetzt werden, haben sich zeitgesteuerte Kommunikationsprotokolle wie TTP oder FlexRay durchgesetzt. Das Medienzugangsprotokoll beruht dabei auf einem statischen Kommunikationszeitplan, der vorab beim Systementwurf festgelegt wird. In diesem Plan ist für jeden Kommunikations-Knoten festgelegt, zu welchem Zeitpunkt innerhalb eines Kommunikationszyklus er Daten senden darf.

Durch Toleranzen der lokalen Taktquellen ist es möglich dass die Kommunikationszeitpläne der verschiedenen Knoten geringfügig voneinander abweichen. Damit es trotz dieser Abweichungen nicht zu Überlappungen kommt wird zwischen den Datenpaketen eine Pause ("inter frame gap") eingefügt, wobei diese Pause im Interesse einer hohen Effizienz natürlich möglichst kurz sein sollte. Durch Maßnahmen zur globalen Uhrensynchronisation in den verteilten Kommunikations-Controllern, wie sie zum Beispiel bei TTP/C eingesetzt werden, können diese Abweichungen deutlich verringert und damit kürzere "inter frame gaps" ermöglicht werden.

Bei zeitgesteuerten Kommunikationsprotokollen ist es besonders wichtig, dass Knoten nur zu den bei der Planung festgelegten Zeitpunkten Daten senden. Ohne besondere Schutzmaßnahmen könnte sonst ein einzelner fehlerhafter Knoten (babbling idiot), der ständig zur falschen Zeit sendet, den gesamten Datenverkehr blockieren. Um das zu verhindern wird der Zugriff auf das Übertragungsmedium bei den genannten Protokollen üblicherweise durch einen Buswächter (bus guardian) geschützt. Der Buswächter verfügt über eine unabhängige Zeitbasis und einen Scheduler, der den Schreibzugriff auf das Medium nur während des vorgesehenen Zeitschlitzes und während kurzer Toleranzbereiche vor und nach dem Zeitschlitz zulässt. Stellt der Buswächter fest, dass ein Kommunikations-Controller außerhalb des für ihn reservierten Zeitraumes versucht auf den Datenbus zu schreiben, so unterbindet der Buswächter diesen Zugriff, meldet einen Fehlerzustand und sperrt dauerhaft weitere Buszugriffe durch diesen Kommunikations-Controller. Auf diese Weise stellt der Buswächter die Fall-Silent Eigenschaft eines Netzknotens sicher.

Kommunikations-Controller und Buswächter sollen möglichst unabhängig voneinander arbeiten. Stand der Technik ist es, dass Kommunikations-Controller und Buswächter mit unabhängigen Taktquellen arbeiten und dass nur einmal je Kommunikationszyklus eine Synchronisation des Buswächters durch den Kommunikations-Controller mit Hilfe des sogenannten ARM-Signal erfolgt. Die Versorgung des Buswächters mit eigenem Takt führt aber neben erhöhten Kosten zu Einschränkungen beim Systementwurf sowie zu verringerter Effizienz, da die "inter frame gaps" so dimensioniert werden müssen, dass es auch nach vielen Jahren nicht durch Abweichungen der Taktfrequenz zur Überlappung von Zeitschlitzen kommt.

Der Artikel "Avoiding the babbling-idiot failure in a time-triggered communication system", Christopher Temple, Institute für technische Informatik, TU Wien, 28th Symposium on Fault-Tolerant Computing, Los Alamitos, CA, 23.06.1998, beschreibt ein Verfahren zur Vermeidung von Störungen aufgrund eines fehlerhaften Knotens (babbling-idiot), der den Datenverkehr blockieren würde. Jeder Knoten enthält einen Controller, einen Buswächter und einen Bustreiber. Wenn ein Controller außerhalb der ihm zugeordneten Zeitpunkte versucht, auf den Bus des Netzwerksystems zuzugreifen, wird der Bustreiber vom Buswächter deaktiviert, so dass eine Störung des Datenverkehrs verhindert wird.

Es ist Aufgabe der Erfindung, ein Kommunikationsnetzwerk zu schaffen, das die obigen Nachteile vermeidet.

Diese Aufgabe wird erfindungsgemäß gelöst durch ein Kommunikationsnetzwerk mit wenigstens zwei Netzknoten, zwischen denen Daten über ein Übertragungsmedium übertragbar sind,
wobei ein Kommunikationszeitplan vorgesehen ist, der den Netzknoten Zeitschlitze für den Zugriff auf das Übertragungsmedium zuweist,
wobei die Netzknoten Jeweils wenigstens einen Kommunikations-Controllcr mit einem ersten Zeitplaner zur Steuerung des Zugriffs der Netzknoten auf das Übertragungsmedium gemäß dem Kommunikationszeitplan aufweisen,
wobei das Kommunikationsnetzwerk wenigstens einen Buswächter mit einem zweiten Zeitplaner zur Überwachung der Zugriffe der Netzknoten auf das Übertragungsmedium gemäß einem Überwachungszeitplan aufweist,
wobei der Kommunikations-Controller Mittel zur Generierung eines lokalen, unabhängigen Taktsignals und eines globalen Taktsignals, das von wenigstens einem Parameter des Kommunikationssystems beeinflussbar ist, aufweist und
wobei das globale Taktsignal sowohl zur Steuerung der ersten Zeitplaner der Kommunikations-Controller als auch zur Steuerung des zweiten Zeitplaners des Buswächters vorgesehen ist.

Der Einsatzbereich der Erfindung bezieht sich auf verteilte Kommunikationssysteme, bei denen der Zugriff auf das Übertragungsmedium entsprechend einem zyklischen Zeitscheibenverfahren (TDMA) erfolgt und bei denen ein Buswächter die Kommunikationszeitpläne eines oder mehrerer Netzknoten überwacht und Medienzugriffe in Abhängigkeit von einem vordefinierten Kommunikationszeitplan zulässt.

Die Synchronisation des Buswächters erfolgt mit Hilfe eines globalen Taktsignals, das der Kommunikations-Controller zur Verfügung stellt. Das globale Taktsignal ist von wenigstens einem Parameter des Kommunikationssystems beeinflussbar. Das globale Taktsignal kann z.B. den zur globalen Uhrensynchronisation der Kommunikations-Controller erforderlichen Korrekturen folgen. Dies kann z.B. dadurch erfolgen, dass die globalen Taktsignale der einzelnen Kommunikations-Controller aufeinander oder in Bezug auf ein externes Referenzsignal abgestimmt werden. Ein zweites lokales Taktsignal ist von diesen Korrekturen unabhängig und wird statisch z.B. aus einem Quarzoszillator des Kommunikations-Controllers abgeleitet.

Das lokale Taktsignal kann bevorzugt zur Überwachung des globalen Taktsignals herangezogen werden.

Neben Lösungen, bei denen jeder der verteilten Knoten über einen eigenen Buswächter verfügt, sind bei sternförmigen Netzwerken auch Lösungen mit einem zentralen Buswächter möglich, wobei der zentrale Buswächter die Kommunikation aller an den Sternkoppler angeschlossenen Knoten überwacht.

Das in dieser Erfindung vorgeschlagene Verfahren ermöglicht eine zeitliche Überwachung des Kommunikations-Controllers ohne die oben geschilderten Nachteile, indem eine kontinuierliche Synchronisation des Buswächters mit dem globalen Taktsignal des Kommunikations-Controllers vorgenommen wird. Dabei kann der Buswächter von einer sehr genauen und über einen langen Zeitraum stabilen Taktquelle des Kommunikations-Controllers und von Algorithmen zur globalen Uhrensynchronisation der verteilten Kommunikations-Controller profitieren. Der bei herkömmlichen Lösungen benötigte Quarzoszillator für den Buswächter kann entfallen. Zum Ausgleich der größeren Abhängigkeit vom Kommunikations-Controller erfolgt im Buswächter eine Überwachung der vom Kommunikations-Controller gelieferten Taktsignale mit Hilfe von geeigneten "Watchdog" - Schaltungen. Hierbei kann das lokale Taktsignal des Kommunikations-Controllers bevorzugt zur Überwachung des globalen Taktsignals des Kommunikations-Controllers herangezogen werden.

In verteilten Echtzeit-Computersystemen, die mit zeitgesteuerten Kommunikationsprotokollen arbeiten, muss trotz der zeitlichen Toleranzen durch lokale, unabhängige Taktquellen in den einzelnen Kommunikations-Controllern ein gemeinsames Zeitverständnis sichergestellt werden. Dies lässt sich beispielsweise durch den Einsatz von temperaturgeregelten, langzeitstabilen Quarzoszillatoren erreichen. Unter ungünstigen Umweltbedingungen und bei wartungsfreien Betriebszeiten von mehreren Jahren, wie sie zum Beispiel bei Anwendungen im Bereich der Automobilindustrie zu berücksichtigen sind, lassen sich die erforderlichen engen Toleranzen nicht einhalten. Um auch unter diesen Bedingungen sicherzustellen, dass es nicht zu Überlagerungen von Datenpaketen auf dem Übertragungsmedium kommt, werden relativ große Pausen zwischen den Datenpaketen benötigt. Einer der Gründe für diese großen Pausen ist, dass bei den heute üblichen Systemen nur einmal zu Beginn eines jeden Kommunikationszyklus eine Synchronisation zwischen den Kommunikations-Controllern erfolgt. Im weiteren Verlauf des Kommunikationszyklus können sich dann auch kleine Abweichungen so aufsummieren, dass nur mit relativ langen "inter frame gaps" eine fehlerfreie Kommunikation möglich ist. Lange "inter frame gaps" führen aber gerade bei Systemen mit relativ kleiner Paketlänge, wie sie zum Beispiel in der Automobiltechnik vorkommen, zu einer geringen Effizienz der Datenübertragung.

Die dieser Erfindung zugrunde liegende Idee ist eine kontinuierliche Synchronisation des Buswächters mit dem globalen Taktsignal des Kommunikations-Controllers. Durch diese Synchronisation wird es möglich, den Datenbus mit engen zeitlichen Toleranzen vor unerlaubten Schreibzugriffen zu schützen, ohne dass der Buswächter dazu Taktoszillatoren mit geringen Toleranzen und hoher Langzeitstabilität benötigen würde. Ausgenutzt wird dabei der Umstand, dass im Kommunikations-Controller als globales Taktsignal üblicherweise bereits ein internes Taktsignalzur Verfügung steht, das alle Korrekturen zur globalen Uhrensynchronisation erfahren hat. Bei den hier betrachteten Protokollen wird dieser interne Takt auch als Makrotick bezeichnet. Mit der Auflösung dieses Makrotick, die in der Regel deutlich geringer als die Periodendauer des eigentlichen Taktsignals ist und in etwa der Systemgenauigkeit entsprechen sollte, erfolgen alle Buszugriffe des Knotens. Das bedeutet, das die Länge von Datenpaketen oder Pausen in Makroticks definiert werden. Die bekannten Verfahren zur globalen Uhrensynchronisation beruhen darauf, die Periodendauer dieses Makroticks so zu korrigieren, dass trotz abweichender Taktfrequenz das vorgegebene Zeitmultiplex-Schema auf dem Bus mit engen Toleranzen eingehalten wird.

Dieses Makrotick-Signal sowie ein weiteres, direkt und ohne Korrektur aus dem Takt des Kommunikations-Controllers abgeleitetes Taktsignal, der sogenannte BG-Tick (bus guardian tick) werden zum Betrieb des Buswächters verwendet. Der Taktoszillator des Buswächters, für den nach dem gegenwärtigen Stand der Technik ein langzeitstabiler Quarzoszillator erforderlich wäre, kann vollständig entfallen. Lediglich für die Überwachung des vom Kommunikations-Controller erzeugten lokalen Taktsignals durch einen "Watchdog" wird ein Oszillator mit sehr geringen Anforderungen an die Genauigkeit der Taktfrequenz benötigt. Dies kann zum Beispiel auch ein RC-Oszillator sein, der erhebliche Kostenvorteile mit sich bringt und eine spätere Integration in einen als integrierte Schaltung realisierten Buswächter erleichtert.

Durch die Synchronisation des Buswächters mit dem globalen Taktsignal des Kommunikations-Controllers wirkt sich ein auf diesem Kommunikations-Controller ausgeführter Algorithmus zur globalen Uhrensynchronisation auch auf den Buswächter aus. Durch diese enge Kopplung können Buszugriffe trotz relativ großer Toleranzen des Taktoszillators für den Kommunikations-Controller mit sehr engen zeitlichen Toleranzen überwacht werden. Die Effizienz des Kommunikationsprotokolls wird damit nicht mehr durch die Anforderungen des Buswächters, sondern wie gewünscht durch die Genauigkeit des Taktoszillators für den Kommunikations-Controller und die Algorithmen zur globalen Uhrensynchronisation bestimmt.

Die Unabhängigkeit des Buswächters bezüglich des Zeitmultiplexschemas ist weiterhin gegeben, nur wird dieses Schema nicht mit Hilfe eines für den Buswächter lokalen Taktoszillators realisiert. Die enge Kopplung zwischen Kommunikations-Controller und Buswächter verursacht aber eine größere Abhängigkeit des Buswächters von der Funktionstüchtigkeit des Kommunikations-Controllers.

Mit Hilfe geeigneter Überwachungsschaltungen für das globale und das lokale Taktsignal der Kommunikations-Controller kann sichergestellt werden, dass Medienzugriffe außerhalb des Kommunikationszeitplans unterbunden werden. Derartige fehlerhafte Zugriffe könnten infolge von Konfigurationsfehlern, Fehlern in der globalen Uhrensynchronisation, bei größeren Abweichungen der Taktfrequenz oder beim völligen Ausfall eines der Taktsignale auftreten. In diesen Fällen wird der Buszugriff zuverlässig gesperrt und damit die Fail-Silent Eigenschaft des Kommunikations-Controllers sichergestellt.

Bei einer bevorzugten Ausführungsform wird mittels einer Watchdog-Schaltung die Periodendauer des von der globalen Uhrensynchronisation beeinflussten globalen Taktsignals überprüft. Als Referenzsignal wird dabei das lokale, unabhängige Taktsignal des Kommunikations-Controllers verwendet. Die Dauer dieser Prüfung kann eine oder mehrere Perioden des von der globalen Uhrensynchronisation beeinflussten globalen Taktsignals betragen.

Die Prüfung des von der globalen Uhrensynchronisation beeinflussten globalen Taktsignals kann für einen konfigurierbaren Teil des Kommunikationszyklus deaktiviert werden, wenn dies für möglichst schnell auszuführende Korrekturen der globalen Uhrzeit erforderlich ist.

Zusätzlich kann im Buswächter zum Schutz gegen Fehler im Scheduling oder in der Takterzeugung des Kommunikations-Controllers die Dauer eines Kommunikationszyklus geprüft werden. Dabei kann ein Synchronisationssignal (ARM) genutzt werden, das den Beginn eines Kommunikationszyklus kennzeichnet.

Der Ausfall sowie grobe Frequenzabweichungen des unabhängigen lokalen Taktsignals werden vorzugsweise ebenfalls mit Hilfe einer Watchdog-Schaltung überwacht. Als Referenz wird ein lokaler Taktgenerator des Buswächters eingesetzt, der wegen geringer Anforderungen an die Genauigkeit auch als RC-Oszillator ausgebildet werden kann.

Eine weitere Watchdog-Schaltung kann eingesetzt werden, um einen Ausfall des lokalen Taktgenerators des Buswächters zu erkennen, wobei als Referenz zum Beispiel die Zeitkonstante einer monostabilen Kippstufe (Analogschaltung) verwendet werden kann.

Die durch die Watchdog-Schaltungen erkannten Fehler bewirken, dass der Buswächter Medienzugriffe unterbindet und eine Fehlermeldung an den übergeordneten Host-Controller abgibt.

Um unerwünschte Fehlermeldungen während des Netzwerk-Startups zu vermeiden, kann die Funktion aller Watchdog-Schaltungen unterdrückt werden, bis ein Knoten zu ersten Mal den Beginn eines Kommunikationszyklus anzeigt (ARM-Signal).

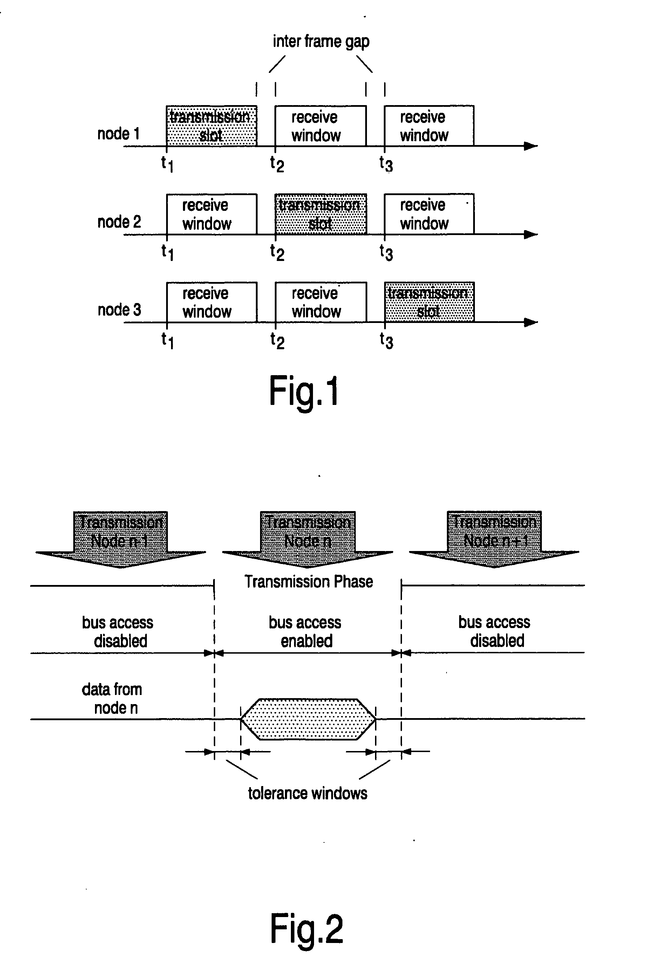

Einige Ausführungsbeispiele der Erfindung werden nachfolgend anhand der Figuren 1 bis 7 näher erläutert.
Fig. 1 zeigt ein vereinfachtes Beispiel für den Kommunikationszeitplan eines Kommunikationsnetzwerks mit den drei Netzknoten 1, 2 und 3, wobei die drei Netzknoten nur zu den festgelegten Zeitpunkten t1, t2 und t3 senden dürfen.
Fig. 2 zeigt das Verhältnis zwischen dem Kommunikationszeitplan eines Kommunikations-Controllers und dem Überwachungszeitplan eines zugeordneten Buswächters. In der unteren Reihe ist für den Knoten n die Zeitspanne dargestellt, welche dem Knoten n gemäß Kommunikationszeitplan zur Übertragung zugewiesen ist. Darüber sind die Öffnungszeiten des Buswächtes dargestellt. Der Buswächter öffnet etwas früher und schließt etwas später, jeweils versetzt um ein Toleranzfenster.

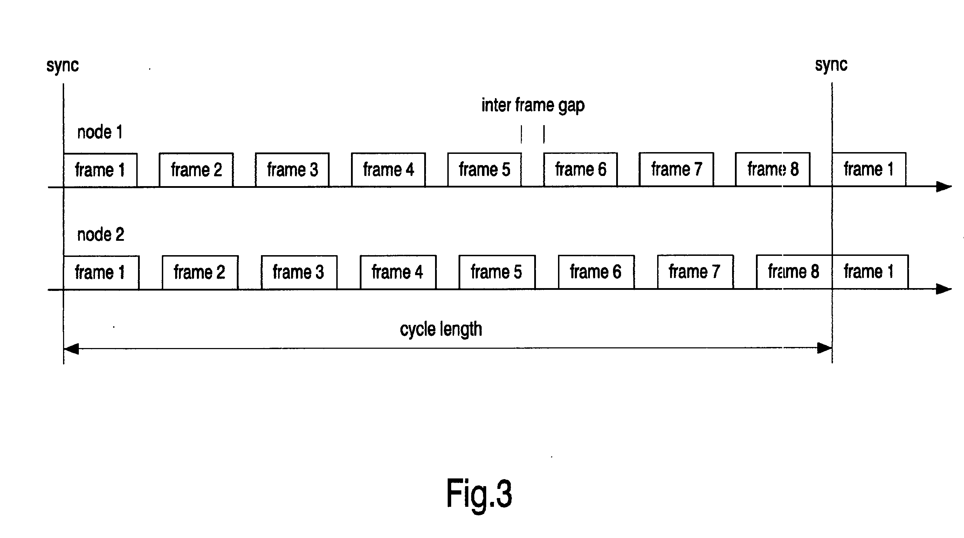

Fig. 3 zeigt ein vereinfachtes Zeitmultiplex-Schema mit zwei Kommunikations-Knoten und einem Kommunikationszyklus, der aus 8 Datenpaketen (frames) besteht. Dieses Beispiel zeigt, dass durch Toleranzen der lokalen Taktquellen die Sendezeitpunkte der beiden Knoten so driften können, dass am Ende des Kommunikationszyklus Kollisionsgefahr besteht. In diesem Beispiel können die Kollisionen durch ausreichend lange "inter frame gaps" verhindert werden. Man erkennt, dass nur einmal zu Beginn jedes Kommunikationszyklus alle Knoten durch den Empfang eines speziellen Symbols synchronisiert werden und dadurch mit steigender Zykluslänge immer größere Abweichungen auftreten. Die Länge des "inter frame gaps" wird als konstanter Parameter für die gesamte Dauer des Kommunikationszyklus festgelegt und kann nicht dynamisch zum Ende des Zyklus vergrößert werden. Bei großen Zykluslängen kann so die erforderliche Länge des "inter frame gap" die Effizienz der Datenübertragung stark beeinträchtigen, insbesondere wenn nur sehr kurze Datenpakete zu übertragen sind. Zur Vermeidung der gezeigten Probleme beim Gleichlauf der verteilten Kommunikations-Controller werden deshalb häufig Methoden zur globalen Uhrensynchronisation eingesetzt, mit deren Hilfe eine kontinuierliche Synchronisation der Kommunikations-Controller erreicht wird. Auf diese Weise werden kurze "inter frame gaps" und damit eine hohe Effizienz erreicht und bei moderaten Anforderungen an die Genauigkeit der Taktversorgung kostengünstige Lösungen ermöglicht.

Ein sehr ähnliches Synchronisationsproblem besteht zwischen Kommunikations-Controller und dem zugehörigen Buswächter, da bei heutigen Systemen auch in diesem Fall unabhängige Taktquellen zum Einsatz kommen.

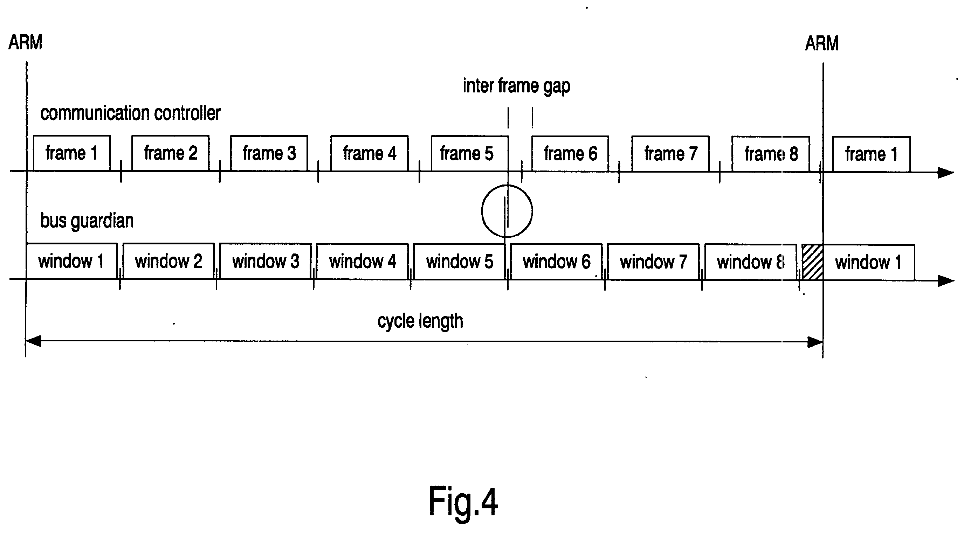

Fig. 4 zeigt ein Beispiel für einen Netzknoten, bei dem der Buswächter wegen abweichender Taktfrequenz im Verlauf eines Kommunikationszyklus wegdriftet. Man erkennt die "inter frame gaps" zwischen den Datenpaketen des Kommunikations-Controllers (communication controller) und die um die Toleranzfenster vergrößerten Öffnungszeiten des Buswächters. Im Beispiel zeigt der Buswächter zwar am Beginn des Kommunikationszyklus ein korrektes Zeitverhalten, weicht aber in der zweiten Hälfte des Zyklus immer stärker von den Sendezeitpunkten des Kommunikations-Controllers ab. Ab dem fünften Datenpaket werden durch zu frühes Schließen des Buswächters sogar Teile der Datenpakete abgeschnitten. Abhilfe wäre hier nur durch Vergrößerung der "inter frame gaps" möglich.

Die Genauigkeit, mit der die Buszugriffe erfolgen können, und damit die notwendige Länge der "inter frame gaps" ergibt sich aus den genannten Gründen nicht aus der durch globale Uhrensynchronisation verbesserten Genauigkeit der Kommunikations-Controller sondern sie wird letztlich durch die Genauigkeit der Taktquellen für die Bus-Wächter begrenzt.

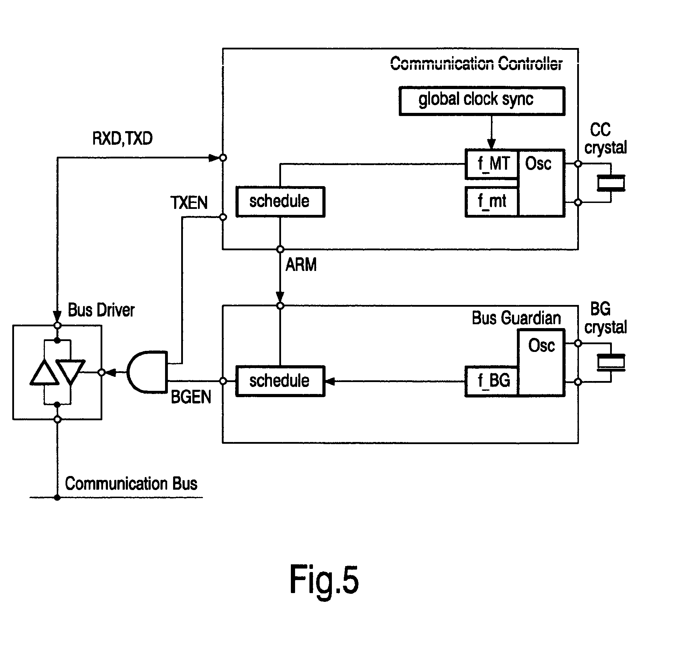

Fig. 5 zeigt den prinzipiellen Aufbau eines Buswächters und seine Anbindung an einen Kommunikations-Controller gemäß dem Stand der Technik. Üblicherweise wird der Buswächter nur einmal am Anfang des Kommunikationszyklus mit Hilfe des ARM-Signals durch den Kommunikations-Controller synchronisiert und läuft dann frei mit der Genauigkeit seines eigenen Taktoszillators bis zum Ende des Zyklus. Das bedeutet, dass sich Taktabweichungen zwischen Kommunikations-Controller und Buswächter bis zum Ende des Kommunikationszyklus unter Umständen so aufsummieren können, dass der Buswächter seine Aufgabe nicht mehr fehlerfrei wahrnehmen kann. Die globale Uhrensynchronisation kann zwar dafür sorgen, dass alle Kommunikations-Controller ein gemeinsames Zeitverständnis haben, hat aber keinen Einfluss auf die Buswächter, da diese aus Gründen der Unabhängigkeit über eigene Taktoszillatoren verfügen. Deren Taktfrequenz ist aber denselben Schwankungen und Langzeiteffekten unterworfen, die schon bei der Synchronisation der Kommunikations-Controller lange "inter frame gaps" erforderten. Eine zusätzliche globale Uhrensynchronisation für die Bus-Wächter kommt aus Kostengründen nicht in Frage, insbesondere da die Bus-Wächter üblicherweise nicht mit einem Prozessor ausgestattet sind.

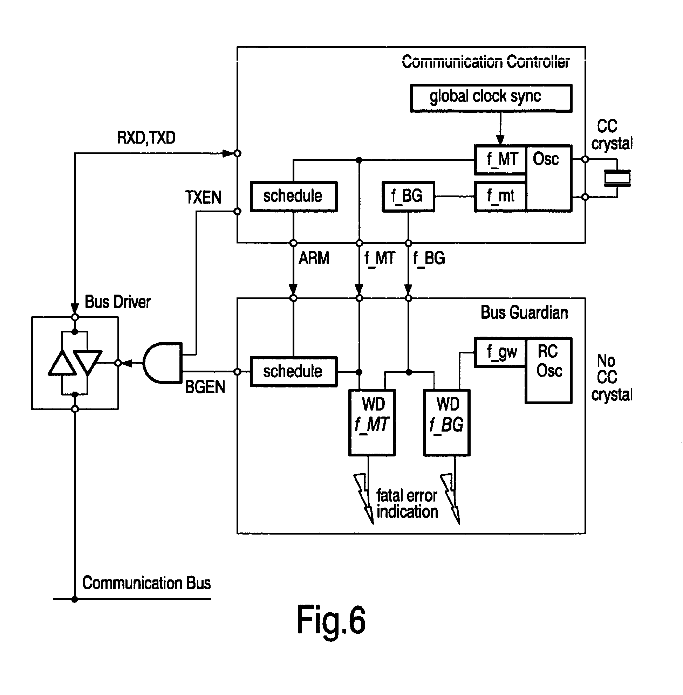

Fig. 6 zeigt einen Ausschnitt aus einem erfindungsgemäßen Kommunikationsnetzwerk mit einem Kommunikations-Controller und einem Buswächter, welche in einem Knoten des Netzwerks implementiert sind und den Zugriff des Knotens auf einen Datenbus des Netzwerks steuern.

Der Kommunikations-Controller generiert ein globales Taktsignal f_MT und ein lokales Taktsignal f_mt.

Der Scheduler (Zeitplaner) des Buswächters steuert die Buszugriffe auf Basis des globalen Taktsignals (Makrotick) f_MT. Die beiden Watchdog-Schaltungen WD_{f_MT} zur Überwachung des Makroticks und WD_{f_BG} zur Überwachung des BG-Ticks wurden hinzugefügt und statt des sonst üblichen Quarzoszillators kommt in diesem Beispiel ein integrierter RC-Oszillator zum Einsatz.

Es erfolgt eine kontinuierliche Synchronisation des Buswächters mit der internen Uhrzeit des zugehörigen Kommunikations-Controllers, wobei diese Uhrzeit typischerweise durch den sogenannten Makrotick repräsentiert wird. Der Makrotick wird aus dem Signal des Taktoszillators im Kommunikations-Controller durch einen digitalen Teiler erzeugt, dessen Teilerverhältnis mit Hilfe des Algorithmus zur globalen Uhrensynchronisation so gesteuert werden kann, dass der Kommunikations-Controller auch bei Abweichungen der Taktfrequenz das korrekte Zeitmultiplex-Schema einhält. Wird nun der Scheduler im Buswächter auch mit diesem Makrotick getaktet, so folgt er den zur Uhrensynchronisation eingefügten Veränderungen der Periodendauer des Makroticks. Mit Hilfe dieser kontinuierlichen Synchronisation zwischen Kommunikations-Controller und Buswächter werden sehr enge Toleranzbereiche für die Öffnungszeiten des Buswächters und damit auch kurze "inter-frame gaps" ermöglicht.

Durch die Synchronisation kann ein eigener, präziser Taktoszillator für den Buswächter entfallen. Neben dem Makrotick wird aber ein Taktsignal als Ersatz für den bisher benutzten lokalen Taktoszillator des Buswächters benötigt. Dieser sogenannte BG-Tick wird durch einen Frequenzteiler direkt aus dem Taktoszillator des Kommunikations-Controllers abgeleitet und ist somit unabhängig von der globalen Uhrensynchronisation.

Der BG-Tick bestimmt die maximale Auflösung, mit der der Buswächter das Öffnen und Schließen des Buszugangs steuern kann. Neben seiner Verwendung als feinauflösender Takt wird der BG-Tick außerdem benötigt, um mit Hilfe einer Watchdog-Schaltung zu prüfen, ob die Periodendauer des Makroticks innerhalb vorgegebener Toleranzen liegt. Diese Grenzen werden bei der Konfiguration des Systems festgelegt und müssen so dimensioniert werden, dass zulässige Abweichungen wie zum Beispiel durch die Uhrensynchronisation toleriert werden. Liegt die Periodendauer des Makrotick außerhalb der Toleranzen oder fällt das Signal ganz aus, so muss der Buswächter die Buszugriffe sperren. Um die Genauigkeit der Überwachung zu erhöhen kann statt einer Makrotick-Periode auch eine konfigurierbare Anzahl von Perioden überwacht werden. Je nach Anforderungen kann die Überwachung so die gesamte Zykluslänge einschließen. Zusätzlich ist die Überwachung der Zykluslänge möglich, indem eine Watchdog-Schaltung die Anzahl der BG-Ticks zwischen zwei aufeinander folgenden ARM-Signalen bestimmt.

Es ist möglich, dass die zur globalen Uhrensynchronisation erforderlichen Korrekturen nicht gleichmäßig über einen Kommunikationszyklus verteilt werden können sondern innerhalb eines vorgegebenen Zeitraumes z. B. innerhalb weniger Makroticks nach dem Beginn des Kommunikationszyklus erfolgen müssen. Die Periodendauer des Makroticks müsste für diese wenigen Perioden erheblich verändert werden, so dass die dann erforderlichen Toleranzen der Watchdog-Schaltung keine genaue Überwachung des Makroticks ermöglichen. Um dies zu vermeiden kann die Überprüfung des Makroticks für einen konfigurierbaren Teil des Kommunikationszyklus deaktiviert werden.

Gegen den Ausfall oder eine abweichende Frequenz des BG-Tick Signals selbst schützt eine weitere Watchdog-Schaltung. Diese prüft in ähnlicher Weise die Periodendauer des BG-Tick Signals und damit indirekt auch die des Taktoszillators im Kommunikations-Controller. Als Referenz-Oszillator eignet sich hier ein Taktoszillator mit relativ großen Toleranzen, da an dieser Stelle nur grobe Abweichungen von der Soll-Periodendauer erkannt werden müssen. Kleine Abweichungen von der Sollfrequenz werden üblicherweise schon mit Hilfe der Algorithmen zur globalen Uhrensynchronisation im Kommunikations-Controller erkannt. Zur Kostenersparnis und zwecks einfacher Integration kann an dieser Stelle ein RC-Oszillator eingesetzt werden.
Alternativ kann der in der Fig. 6 dargestellte Buswächter auch mehreren Netzknoten zugeordnet werden und den Zugriff von mehreren Netzknoten steuern. Dies ist insbesondere bei sternförmigen Netzwerken vorteilhaft.

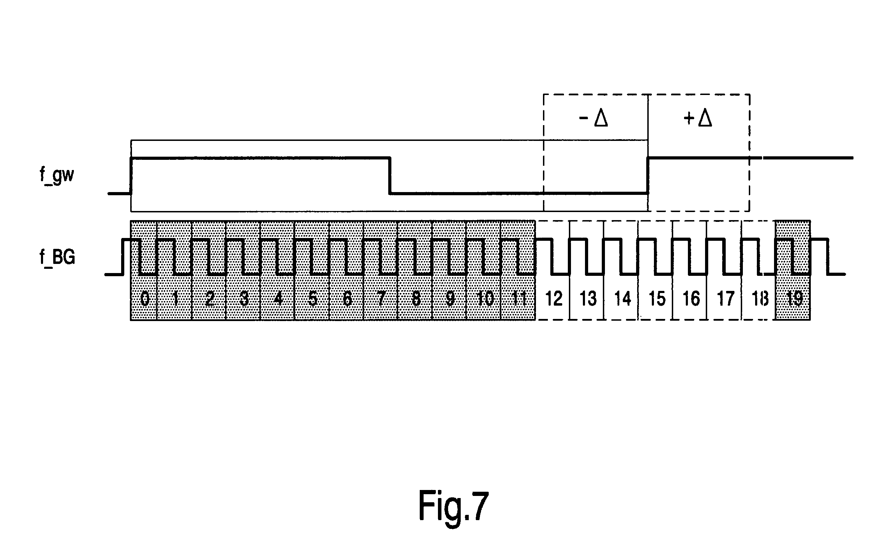

Fig. 7 zeigt die prinzipielle Arbeitsweise der Watchdog-Schaltung WD_{f_BG} zur Überwachung des BG-Ticks. Das Signal f_gw wird durch Frequenzteilung aus dem Taktsignal des RC-Oszillators gewonnen. Mit Hilfe dieses Signals wird eine Torzeit definiert und die Anzahl der Taktperioden des BG-Tick Signals f_BG innerhalb dieser Torzeit bestimmt.
Durch Vergleich des Zählergebnisses mit dem durch die Toleranzbereiche -Δ und +Δ definierten Fenster wird bei zu großen Abweichungen ein Fehler signalisiert und der Buszugriff sofort gesperrt. Der zweite Buswächter WD_{f_MT} ist ebenso aufgebaut, nur dass die Torzeit der Periodendauer des Makroticks entspricht und die Anzahl der BG-Ticks gezählt wird. Bei der praktischen Realisierung der Watchdog-Schaltungen muss darauf geachtet werden, dass der Buswächter auf einen Ausfall des RC-Oszillators sowie der Signale f_MT und f_BG vom Kommunikations-Controller in kürzestmöglicher Zeit mit der Sperrung der Buszugriffe reagiert, um die Fail-Silent Eigenschaft des Knotens auch im Fehlerfall sicherzustellen.

## Patentansprüche

1. Kommunikationsnetzwerk mit wenigstens zwei Netzknoten (1, 2, 3), zwischen denen Daten über ein Übertragungsmedium übertragbar sind,
wobei ein Kommunikationszeitplan vorgesehen ist, der den Netzknoten (1, 2, 3) Zeitschlitze für den Zugriff auf das Übertragungsmedium zuweist,
wobei die Netzknoten (1, 2, 3) jeweils wenigstens einen Kommunikations-Controller mit einem ersten Zeitplaner zur Steuerung des Zugriffs der Netzknoten (1, 2, 3) auf das Übertragungsmedium gemäss dem Kommunikationszeitplan aufweisen,
wobei das Kommunikationsnetzwerk wenigstens einen Buswächter mit einem zweiten Zeitplaner zur Überwachung der Zugriffe der Netzknoten (1, 2, 3) auf das Übertragungsmedium gemäss einem Überwachungszeitplan aufweist,
**dadurch gekennzeichnet, dass** der Kommunikations-Controller Mittel zur Generierung eines lokalen, unabhängigen Taktsignals (f_mt) und eines globalen Taktsignals (f_MT), das von wenigstens einem Parameter des Kommunikationssystems beeinflussbar ist, aufweist und
wobei das globale Taktsignal (f_MT) sowohl zur Steuerung des ersten Zeitplaners des Kommunikations-controllers als auch zur Steuerung des zweiten Zeitplaners des Buswächters vorgesehen ist.

2. Kommunikationsnetzwerk nach Anspruch 1, **dadurch gekennzeichnet, dass** der Buswächter eine erste Überwachungsschaltung (WD f_MT) aufweist, welche mittels des lokalen Taktsignals (f_mt) des Kommunikations-Controllers das globale Taktsignal (f_MT) des Kommunikations-Controllers überwacht.

3. Kommunikationsnetzwerk nach Anspruch 1, **dadurch gekennzeichnet, dass** der Buswächter einen Buswächteroszillator (RC Osc) aufweist, welcher ein lokales Taktsignal (f_gw) an eine zweite Überwachungsschaltung (WD f_BG) liefert, und dass die zweite Überwachungsschaltung (WD f_BG) mittels des lokalen Taktsignals (f_gw) des Buswächters das lokale Taktsignal (f_mt) des Kommunikations-Controllers überwacht.

4. Kommunikationsnetzwerk nach Anspruch 3, **dadurch gekennzeichnet, dass** der Buswächteroszillator (RC Osc) ein RC-Oszillator ist.

5. Kommunikationsnetzwerk nach Anspruch 3, **dadurch gekennzeichnet, dass** der Buswächter eine Ausfallüberwachungsschaltung aufweist, welche den Ausfall des Buswächteroszillators (RC Osc) überwacht und dass die Ausfallüberwachungsschaltung bei Ausfall des Buswächteroszillators (RC Osc) die Sperrung des Zugriffs der diesem Buswächter zugeordneten Knoten (1, 2, 3) auf das Übertragungsmedium veranlasst oder eine Fehlermeldung generiert.

6. Kommunikationsnetzwerk nach Anspruch 1, **dadurch gekennzeichnet, dass** in die Kommunikations-Controller des Netzwerks ein Algorithmus implementiert ist, mittels dessen die globalen Taktsignale (f_MT) der Kommunikations-Controller aufeinander oder in Bezug auf ein Referenzsignal abgestimmt werden.

7. Kommunikationsnetzwerk nach Anspruch 2, **dadurch gekennzeichnet, dass** die erste Überwachungsschaltung (WD f_MT) einen Zähler aufweist, der die Anzahl der Perioden des lokalen Taktsignals (f_mt) über eine oder mehrere Perioden des globalen Taktsignals (f_MT) bestimmt und dass die erste Überwachungsschaltung (WD f_MT) die Sperrung des Zugriffs des dem Buswächter zugeordneten Knotens (1, 2, 3) oder der dem Buswächter zugeordneten Knoten (1, 2, 3) auf das Übertragungsmedium veranlasst, wenn die Anzahl der gezählten Perioden ausserhalb eines vorgebbaren Toleranzbereiches liegt.

8. Kommunikationsnetzwerk nach Anspruch 3, **dadurch gekennzeichnet, dass** die zweite Überwachungsschaltung(WD f_BG) einen Zähler aufweist; der die Anzahl der Perioden des lokalen Taktsignals (f_mt) des Kommunikations-Controllers über eine oder mehrere Perioden des lokalen Taktsignals (f_gw) des Buswächters bestimmt und dass die zweite Überwachungsschaltung (WD f_BG) die Sperrung des Zugriffs des dem Buswächter zugeordneten Knotens (1, 2, 3) oder der dem Buswächter zugeordneten Knoten (1, 2, 3) auf das Übertragungsmedium veranlasst, wenn die Anzahl der gezählten Perioden ausserhalb eines vorgebbaren Toleranzbereiches liegt.

9. Kommunikationsnetzwerk nach Anspruch 1,**dadurch gekennzeichnet, dass** die Kommunikations-Controller einen Quarzoszillator (Osc) aufweisen, dass das lokale Taktsignal (f_mt) der Kommunikations-Controller mittels eines festen Teilers aus dem Signal des Quarzoszillators abgeleitet wird und dass das globale Taktsignal (f_MT) der Kommunikations-Controller mittels eines variablen Teilers aus dem Signal des Quarzoszillators (Osc) abgeleitet wird, wobei das Teilerverhältnis des variablen Teilers von wenigstens einem Parameter des Kommunikationssystems beeinflussbar ist.

10. Kommunikations-Controller für ein Kommunikationsnetzwerk, wobei der Kommunikations-Controller einen ersten Zeitplaner enthält und zur Steuerung des Zugriffs eines Netzknotens (1, 2, 3) auf ein Übertragungsmedium des Netzwerks gemäss einem Kommunikationszeitplan vorgesehen ist, **dadurch gekennzeichnet, dass** der Kommunikations-Controller Mittel zur Generierung eines lokalen, unabhängigen Taktsignals (f_mt) und eines globalen Taktsignals (f_MT), das von wenigstens einem Parameter des Kommunikationsnetzwerks beeinflussbar ist, aufweist,
wobei das globale Taktsignal (f_MT) sowohl zur Steuerung des ersten Zeitplaners des Kommunikations-Controllers als auch zur Steuerung eines zweiten Zeitplaners eines Buswächters vorgesehen ist.

11. Buswächter, der an einen Kommunikations-Controller eines Kommunikationsnetzwerks angeschlossen ist und einen Ausgangsanschluss aufweist, der an das Kommunikationsnetzwerk angeschlossen ist, wobei der Buswächter eingerichtet ist, den Zugriff wenigstens eines Netzknotens (1, 2, 3) auf das Übertragungsmediumdes Kommunikationsnetzwerkes gemäss einem Überwachungszeitplan des Buswächters zu überwachen, **dadurch gekennzeichnet, dass** der Buswächter enthält:
einen Anschluss zum Empfang eines globalen Taktsignals (f_MT) vom Kommunikations-Controller; und
einen Anschluss zum Empfang eines von einem lokalen Taktsignal (f_mt) des Kommunikations-Controllers abgeleiteten Taktsignals (f_BG) vom Kommunikations-Controller; und
einen Zeitplaner, der das globale Taktsignal (f_MT) empfängt und mit dem Ausgangsanschluss des Buswächters verbunden ist; und
eine erste Überwachungsschaltung (WD f_MT) zur Überwachung des globalen Taktsignals (f_MT), die das abgeleitete Taktsignal (f_BG) und das globale Taktsignal (f_MT) vom Kommunikations-Controller empfängt.

12. Verfahren zur Steuerung eines Kommunikationsnetzwerks mit wenigstens zwei Netzknoten (1, 2, 3), zwischen denen Daten über ein Übertragungsmedium übertragen werden,
wobei ein Kommunikationszeitplan vorgesehen ist, der den Netzknoten (1, 2, 3) Zeitschlitze für den Zugriff auf das Übertragungsmedium zuweist,
wobei die Netzknoten (1, 2, 3) jeweils wenigstens einen Kommunikations-Controller mit einem ersten Zeitplaner zur Steuerung des Zugriffs der Netzknoten (1, 2, 3) auf das Übertragungsmedium gemäss dem Kommunikationszeitplan aufweisen,
wobei das Kommunikationsnetzwerk wenigstens einen Buswächter mit einem zweiten Zeitplaner zur Überwachung der Zugriffe der Netzknoten (1, 2, 3) auf das Übertragungsmedium gemäss einem Überwachungszeitplan aufweist,
**dadurch gekennzeichnet, dass**
der Kommunikations-Controller ein lokales, unabhängiges Taktsignal (f_mt) und ein globales Taktsignal (f_MT), das von wenigstens einem Parameter des Kommunikationssystems beeinflussbar ist, generiert und
das globale Taktsignal (f_MT) sowohl die ersten Zeitplaner der Kommunikations-Controller als auch den zweiten Zeitplaner des Buswächters steuert.

## Claims

1. A communication network with at least two network nodes (1, 2, 3), between which data can be transmitted via a transmission medium,
wherein a communication schedule is provided which allots time slots to the network nodes (1, 2, 3) for access to the transmission medium,
wherein the network nodes (1, 2, 3) each comprise at least one communication controller with a first scheduler for controlling access by the network nodes (1, 2, 3) to the transmission medium in accordance with the communication schedule, and
wherein the communication network comprises at least one bus guardian with a second scheduler for monitoring accesses by the network nodes (1, 2, 3) to the transmission medium in accordance with a monitoring schedule,
**characterized in that**
the communication controller comprises means for generating a local, independent clock signal (f_mt) and a global clock signal (f_MT) that can be influenced by at least one parameter of the communication system, and
the global clock signal (f_MT) is provided both to control the first scheduler of the communication controller and to control the second scheduler of the bus guardian

2. A communication network as claimed in claim 1, **characterized in that** the bus guardian comprises a first monitoring circuit (WD f_MT) which monitors the global clock signal (f_MT) of the communication controller by means of the local clock signal (f_mt) of the communication controller.

3. A communication network as claimed in claim 1, **characterized in that** the bus guardian comprises a bus guardian oscillator (RC Osc) which supplies a local clock signal (f_gw) to a second monitoring circuit (WD f_BG), and **in that** said second monitoring circuit (WD f_BG) monitors the local clock signal (f_mt) of the communication controller by means of the local clock signal (f_gw) of the bus guardian.

4. A communication network as claimed in claim 3, **characterized in that** the bus guardian oscillator (RC Osc) is an RC oscillator.

5. A communication network as claimed in claim 3, **characterized in that** the bus guardian comprises a failure monitoring circuit which monitors a failure of the bus guardian oscillator (RC Osc), and **in that**, in the event of a failure of the bus guardian oscillator (RC Osc), the failure monitoring circuit either causes the access by the node (1, 2, 3) associated with the relevant bus guardian to the transmission medium to be blocked or generates an error message.

6. A communication network as claimed in claim 1, **characterized in that** an algorithm is implemented in the communication controller of the network, by means of which algorithm the global clock signals (f_MT) of the communication controllers are adjusted to one another or in relation to a reference signal.

7. A communication network as claimed in claim 2, **characterized in that** the first monitoring circuit (WD f_MT) comprises a counter which determines the number of periods of the local clock signal (f_ mt) over one or more periods of the global clock signal (f_MT), and **in that** the first monitoring circuit (WD f_MT) causes the access by the node (1, 2, 3) associated with the bus guardian or by the nodes (1, 2, 3) associated with the bus guardian to the transmission medium to be blocked if the number of periods thus counted lies outside a predeterminable tolerance zone.

8. A communication network as claimed in claim 3, **characterized in that** the second monitoring circuit (WD f_BG) comprises a counter which determines the number of periods of the local clock signal (f_mt) of the communication controller over one or more periods of the local clock signal (f_gw) of the bus guardian, and **in that** the second monitoring circuit causes the access by the node (1, 2, 3) associated with the bus guardian or by the nodes (1, 2, 3) associated with the bus guardian to the transmission medium to be blocked if the number of periods thus counted lies outside a predeterminable tolerance zone.

9. A communication network as claimed in claim 1, **characterized in that** the communication controllers comprise a quartz oscillator (Osc), **in that** the local clock signal (f_mt) of the communication controllers is derived from the signal of the quartz oscillator (Osc) by means of a fixed divider, and **in that** the global clock signal (f_MT) of the communication controllers is derived from the signal of the quartz oscillator (Osc) by means of a variable divider, wherein the divider ratio of the variable divider can be influenced by at least one parameter of the communication system.

10. A communication controller for a communication network, wherein the communication controller is provided with a first scheduler and is designed for controlling access by a network node (1, 2, 3) to a transmission medium of the network in accordance with a communication schedule, **characterized in that**
the communication controller comprises means for generating a local, independent clock signal (f_mt) and a global clock signal (f_MT) that can be influenced by at least one parameter of the communication network, and
the global clock signal (f_MT) is provided both to control the first scheduler of the communication controller and to control a second scheduler of a bus guardian.

11. A bus guardian connected to a communication controller of a communication network and comprising an output terminal that is connected to the communication network, which bus guardian is designed for monitoring the access of at least one network node (1, 2, 3) to the transmission medium in accordance with a monitoring time schedule of the bus guardian, **characterized in that** the bus guardian comprises:
a terminal for receiving a global clock signal (f_MT) from the communication controller, a terminal for receiving from the communication controller a clock signal (f_BG) that is derived from a local clock signal (f_mt) of the communication controller,
a time scheduler which receives the global clock signal (f_MT) and which is connected to the output terminal of the bus guardian, and
a first monitoring circuit (WD f_MT) which receives the derived clock signal (f_BG) and the global clock signal (f_MT) from the communication controller, for the purpose of monitoring the global clock signal (f_MT).

12. A method of controlling a communication network with at least two network nodes (1, 2, 3) between which data can be transmitted via a transmission medium,
wherein a communication schedule is provided which allots time slots to the network nodes (1, 2, 3) for access to the transmission medium,
wherein the network nodes (1, 2, 3) each comprise at least one communication controller with a first scheduler for controlling access by the network nodes (1, 2, 3) to the transmission medium in accordance with the communication schedule, and
wherein the communication network comprises at least one bus guardian with a second scheduler for monitoring accesses by the network nodes (1, 2, 3) to the transmission medium in accordance with a monitoring schedule,
**characterized in that**
the communication controller generates a local, independent clock signal (f_mt) and a global clock signal (f_MT) that can be influenced by at least one parameter of the communication system, and
the global clock signal (f_MT) controls both the first schedulers of the communication controllers and the second scheduler of the bus guardian.

## Revendications

1. Réseau de communication avec au moins deux noeuds de réseau (1, 2, 3), entre lesquels peuvent être transmises des données par l'intermédiaire d'un moyen de transmission, un planning de communication étant prévu, qui affecte aux noeuds de réseau (1, 2, 3) des intervalles de temps pour l'accès au moyen de transmission, les noeuds de réseau (1, 2, 3) présentant respectivement au moins un contrôleur de communication avec un premier planning pour la commande de l'accès des noeuds de réseau (1, 2, 3) au moyen de transmission selon le planning de communication, le réseau de communication présentant au moins une unité de surveillance de bus avec un second planning pour la surveillance des accès des noeuds de réseau (1, 2, 3) au moyen de transmission selon un planning de surveillance, **caractérisé en ce que** le contrôleur de communication comprend des moyens pour générer un signal local indépendant de cadence (f_mt) et un signal global de cadence (f_MT), qui peut être influencé par au moins un paramètre du système de communication et le signal global de cadence (f_MT) étant prévu aussi bien pour la commande du premier planning du contrôleur de communication que pour la commande du second planning de l'unité de surveillance de bus.

2. Réseau de communication selon la revendication 1, **caractérisé en ce que** l'unité de surveillance de bus présente un premier circuit de surveillance (WD f_MT), lequel surveille au moyen du signal local de cadence (f_mt) du contrôleur de communication le signal global de cadence (f_MT) du contrôleur de communication.

3. Réseau de communication selon la revendication 1, **caractérisé en ce que** l'unité de surveillance de bus présente un oscillateur de l'unité de surveillance de bus (RC Osc), lequel fournit un signal local de cadence (f_gw) à un second circuit de surveillance (WD f_BG), et **en ce que** le second circuit de surveillance (WD f_BG) surveille au moyen du signal local de cadence (f_gw) de l'unité de surveillance de bus le signal local de cadence (f_mt) du contrôleur de communication.

4. Réseau de communication selon la revendication 3, **caractérisé en ce que** l'oscillateur de l'unité de surveillance de bus (RC Osc) est un oscillateur RC.

5. Réseau de communication selon la revendication 3, **caractérisé en ce que** l'unité de surveillance de bus présente un circuit de surveillance de défaillance, lequel surveille la défaillance de l'oscillateur de l'unité de surveillance de bus (RC Osc) et **en ce que** le circuit de surveillance de défaillance transmet au moyen de transmission, en cas de défaillance de l'oscillateur de l'unité de surveillance de bus (RC Osc), le blocage de l'accès des noeuds (1, 2, 3) affectés à cette unité de surveillance de bus ou génère un message d'erreur.

6. Réseau de communication selon la revendication 1, **caractérisé en ce que** dans les contrôleurs de communication du réseau est implémenté un algorithme, au moyen duquel les signaux globaux de cadence (f_MT) des contrôleurs de communication sont ajustés les uns par rapport aux autres ou par rapport à un signal de référence.

7. Réseau de communication selon la revendication 2, **caractérisé en ce que** le premier circuit de surveillance (WD f_MT) présente un compteur, qui détermine le nombre de périodes du signal local de cadence (f_mt) par l'intermédiaire d'une ou de plusieurs périodes du signal global de cadence (f_MT) et **en ce que** le premier circuit de surveillance (WD f_MT) transmet au moyen de transmission le blocage de l'accès du noeud (1, 2, 3) affecté à l'unité de surveillance de bus ou des noeuds (1, 2, 3) affectés à l'unité de surveillance de bus, lorsque le nombre de périodes comptées se situe en dehors d'une zone de tolérance prédéterminable.

8. Réseau de communication selon la revendication 3, **caractérisé en ce que** le second circuit de surveillance (WD f_BG) présente un compteur, qui détermine le nombre de périodes du signal local de cadence (f_mt) du contrôleur de communication par l'intermédiaire d'une ou de plusieurs périodes du signal local de cadence (f_gw) de l'unité de surveillance de bus et **en ce que** le second circuit de surveillance (WD f_BG) transmet au moyen de transmission le blocage de l'accès du noeud (1, 2, 3) affecté à l'unité de surveillance de bus ou des noeuds (1, 2, 3) affectés à l'unité de surveillance de bus, lorsque le nombre de périodes comptées se situe en dehors d'une zone de tolérance prédéterminable.

9. Réseau de communication selon la revendication 1, **caractérisé en ce que** les contrôleurs de communication comportent un oscillateur à quartz (Osc), **en ce que** le signal local de cadence (f_mt) des contrôleurs de communication est dérivé au moyen d'un diviseur fixe à partir du signal d'oscillateur à quartz et **en ce que** le signal global de cadence (f_MT) des contrôleurs de communication est dérivé au moyen d'un diviseur variable à partir du signal de l'oscillateur à quartz (Osc), le rapport de division du diviseur variable pouvant être influencé par au moins un paramètre du système de communication.

10. Contrôleur de communication pour un réseau de communication, le contrôleur de communication contenant un premier planning et étant prévu pour la commande de l'accès d'un noeud de réseau (1, 2, 3) à un moyen de transmission du réseau selon un planning de communication, **caractérisé en ce que** le contrôleur de communication présente des moyens pour générer un signal local indépendant de cadence (f_mt) et un signal global de cadence (f_MT), qui peut être influencé par au moins un paramètre du réseau de communication, le signal global de cadence (f_MT) étant prévu aussi bien pour la commande d'un premier planning du contrôleur de communication que pour la commande d'un second planning d'une unité de surveillance de bus.

11. Unité de surveillance de bus, connectée à un contrôleur de communication d'un réseau de communication et comprenant une connexion de sortie qui est connectée au réseau de communication, l'unité de surveillance de bus étant agencée pour surveiller l'accès d'au moins un noeud de réseau (1, 2, 3) au moyen de communication du réseau de communication selon un planning de surveillance de l'unité de surveillance de bus, **caractérisée en ce que** l'unité de surveillance de bus contient :
une connexion pour la réception d'un signal global de cadence (f_MT) du contrôleur de communication ; et
une connexion pour la réception d'un signal de cadence (f_ BG) du contrôleur de communication, dérivé d'un signal local de cadence (f_mt) du contrôleur de communication ; et
un planning, qui reçoit le signal global de cadence (f_MT) et qui est relié à la connexion de sortie de l'unité de surveillance de bus ; et
un premier circuit de surveillance (WD f_MT) pour la surveillance du signal global de cadence (f_MT), qui reçoit le signal de cadence dérivé (f_BG) et le signal global de cadence (f_MT) du contrôleur de communication.

12. Procédé pour la commande d'un réseau de communication avec au moins deux noeuds de réseau (1, 2, 3) entre lesquels sont transmises des données par l'intermédiaire d'un moyen de transmission, un planning de communication étant prévu qui affecte aux noeuds de réseau (1, 2, 3) des intervalles de temps pour l'accès au moyen de transmission, les noeuds de réseau (1, 2, 3) présentant respectivement au moins un contrôleur de communication avec un premier planning pour la commande de l'accès des noeuds de réseau (1, 2, 3) au moyen de transmission selon le planning de communication, le réseau de communication présentant au moins une unité de surveillance de bus avec un second planning pour la surveillance des accès des noeuds de réseau (1, 2, 3) au moyen de transmission selon un planning de surveillance,
**caractérisé en ce que** le contrôleur de communication génère un signal local indépendant de cadence (f_mt) et un signal global de cadence (f_MT), pouvant être influencé par au moins un paramètre du système de communication, et le signal global de cadence (f_MT) commande aussi bien les premiers plannings des contrôleurs de communication que le second planning de l'unité de surveillance de bus.
